(19) Europäisches Patentamt
European Patent Office
Office européen des brevets

(11) **EP 3 194 225 B1**

(12) **EUROPÄISCHE PATENTSCHRIFT**

(45) Veröffentlichungstag und Bekanntmachung des Hinweises auf die Patenterteilung:
**30.10.2019 Patentblatt 2019/44**

(21) Anmeldenummer: **15757212.4**

(22) Anmeldetag: **26.08.2015**

(51) Int Cl.:
*G01P 3/489* (2006.01)       *B60T 8/88* (2006.01)
*B60T 8/96* (2006.01)        *B60T 17/22* (2006.01)
*B60T 8/171* (2006.01)

(86) Internationale Anmeldenummer:
**PCT/EP2015/069565**

(87) Internationale Veröffentlichungsnummer:
**WO 2016/041749 (24.03.2016 Gazette 2016/12)**

(54) **RADDREHZAHLSENSOR**

WHEEL SPEED SENSOR

CAPTEUR DE VITESSE DE ROTATION DE ROUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.09.2014 DE 102014218704**

(43) Veröffentlichungstag der Anmeldung:
**26.07.2017 Patentblatt 2017/30**

(73) Patentinhaber: **Continental Teves AG & Co. OHG 60488 Frankfurt am Main (DE)**

(72) Erfinder: **ENDRES, Ralf 64521 Gross-Gerau (DE)**

(56) Entgegenhaltungen:
**EP-A2- 1 890 159**       **DE-A1- 10 146 949**
**DE-A1-102010 040 565**   **DE-A1-102011 103 172**
**US-A1- 2010 277 224**

EP 3 194 225 B1

**Beschreibung**

Die vorliegende Erfindung betrifft einen Raddrehzahlsensor.

Ein Kraftfahrzeug umfasst häufig einen Raddrehzahlsensor zur Erfassung einer Drehzahl eines Rads des Kraftfahrzeugs, welcher durch ein Steuergerät mit einer Betriebsspannung beaufschlagbar ist. Das Steuergerät wird hierbei häufig durch die Kraftfahrzeugbatterie mit einer Versorgungsspannung versorgt. Insbesondere wenn das Kraftfahrzeug als ein Hybridkraftfahrzeug ausgebildet ist, unterliegt die von der Kraftfahrzeugbatterie bereitgestellte Versorgungsspannung häufig Schwankungen, wodurch Schwankungen der Betriebsspannung verursacht werden können. Dadurch kann ein Betrieb des Raddrehzahlsensors gestört werden.

Um eine Störung des Betriebs des Raddrehzahlsensors und damit fehlerhafte Signale zu vermeiden kann der Raddrehzahlsensor bei Unterschreitung eines ersten vorbestimmten Schwellwertes durch die Betriebsspannung von einem Normalbetrieb in einen definierten Notbetrieb überführt werden, in welchem eine Funktionalität des Raddrehzahlsensors eingeschränkt oder deaktiviert ist. Im weiteren Verlauf kann der Raddrehzahlsensor bei Überschreiten eines zweiten vorbestimmten Schwellwertes durch die Betriebsspannung von dem Notbetrieb zurück in den Normalbetrieb überführt werden. Hierbei wird der zweite vorbestimmte Schwellwert häufig größer als der erste vorbestimmte Schwellwert gewählt, um ein ständiges und ungewolltes Umschalten zwischen dem Normalbetrieb und dem Notbetrieb zu vermeiden. Die jeweiligen vorbestimmten Schwellwerte werden jedoch häufig empirisch bestimmt, wodurch der Betrieb des Raddrehzahlsensors ineffizient sein kann.

DE-A-101 46 949 zeigt einen Raddrehzahlsensor mit einem solchen Notbetrieb.

Es ist die der Erfindung zugrundeliegende Aufgabe, einen effizienteren Raddrehzahlsensor anzugeben.

Diese Aufgabe wird durch den Gegenstand mit den Merkmalen nach dem unabhängigen Anspruch gelöst. Vorteilhafte Ausführungsformen der Erfindung sind Gegenstand der Figuren, der Beschreibung und der abhängigen Ansprüche.

Gemäß einem Aspekt der Erfindung wird die Aufgabe durch einen Raddrehzahlsensor zur Erfassung einer Drehzahl eines Rads eines Kraftfahrzeugs gelöst, wobei der Raddrehzahlsensor durch ein Steuergerät mit einer Betriebsspannung beaufschlagbar ist, und wobei das Steuergerät einen Lastwiderstand mit einem Lastwiderstandswert aufweist, mit: einem Spannungseingang, an welchen die Betriebsspannung durch das Steuergerät anlegbar ist; einer elektrischen Schaltung, welche ausgebildet ist, einen Einschaltspannungswert in Abhängigkeit des Lastwiderstandswertes zu bestimmen; und einer Betriebssteuerung, welche ausgebildet ist, den Raddrehzahlsensor bei Erreichen des Einschaltspannungswertes durch die Betriebsspannung in einen Normalbetrieb zu überführen, und welche ausgebildet ist, den Raddrehzahlsensor bei Erreichen eines Ausschaltspannungswertes durch die Betriebsspannung in einen Notbetrieb zu überführen. Dadurch wird der Vorteil erreicht, dass ein Betrieb des Raddrehzahlsensors an das verwendete Steuergerät angepasst werden kann.

Das Kraftfahrzeug kann ein Personenkraftfahrzeug, ein Lastkraftfahrzeug, ein Automobil, ein Motorrad, ein Elektrokraftfahrzeug oder ein Hybridkraftfahrzeug, wie ein Hybridfahrzeug, sein. Ferner kann der Raddrehzahlsensor einen Hall-Sensor, einen magnetoresistiven Sensor und/oder einen optischen Sensor umfassen. Das Rad des Kraftfahrzeuges kann ferner einen magnetischen Geberring und/oder einen Lochscheibenrand umfassen. Ferner kann in dem Notbetrieb des Raddrehzahlsensors eine Funktionalität des Raddrehzahlsensors eingeschränkt oder deaktiviert sein.

Der Lastwiderstandswert kann ein Innenwiderstandswert oder ein Quellwiderstandswert des Steuergerätes sein. Beispielsweise beträgt der Lastwiderstandswert 10Ω, 20Ω, 35Ω, 50Ω, 75Ω, 100Ω, 115Ω oder 300Ω. Ferner kann der Raddrehzahlsensor eine Erfassungseinrichtung zum Erfassen des Lastwiderstandwertes umfassen. Der Raddrehzahlsensor kann ferner eine Programmierschnittstelle oder ein Betätigungselement, wie ein Dual In-Line Package (DIP) Schaltelement, zum Einstellen des Lastwiderstandwertes umfassen. Ferner kann der Lastwiderstandswert in einem Speicher des Raddrehzahlsensors vorgespeichert sein.

Die Betriebsspannung kann 1V, 5V, 10V, 12V, 15V, 20V, 25V, 30V, 35V, 40V, 45V oder 50V betragen. Der Ausschaltspannungswert kann vorbestimmt sein. Beispielsweise beträgt der Ausschaltspannungswert 1V, 2V, 3V, 4V, 5V, 6V, 7V, 8V, 9V oder 10V. Ferner kann der Einschaltspannungswert 0,5V, 1V, 2V, 3V, 4V, 5V, 10V, 12V, 15V, 20V, 25V oder 50V betragen.

In einer vorteilhaften Ausführungsform ist die elektrische Schaltung durch einen Prozessor gebildet. Dadurch wird der Vorteil erreicht, dass die elektrische Schaltung kostengünstig bereitgestellt werden kann.

In einer weiteren vorteilhaften Ausführungsform ist der Raddrehzahlsensor in dem Notbetrieb ausgebildet, einen Strom mit einem drehzahlunabhängigen, insbesondere mit einem konstanten, Stromwert auszugeben. Dadurch wird der Vorteil erreicht, dass der Notbetrieb effizient durch das Steuergerät detektiert werden kann.

In einer weiteren vorteilhaften Ausführungsform ist der Raddrehzahlsensor in dem Normalbetrieb ausgebildet, einen Strom mit einem von einer Drehzahl des Rades abhängigen Stromwert auszugeben. Dadurch wird der Vorteil erreicht, dass das Steuergerät die Drehzahl des Rades effizient erfassen kann.

Erfindungsgemäß ist die elektrische Schaltung ausgebildet, den Einschaltspannungswert ferner in Abhängigkeit von dem Ausschaltspannungswert zu bestimmen. Dadurch wir der Vorteil erreicht, dass der Betrieb des Raddrehzahlsensors weiter optimiert werden kann.

Erfindungsgemäß ist die elektrische Schaltung ferner ausgebildet, den Ausschaltspannungswert in Abhängigkeit von dem Lastwiderstandswert zu bestimmen. Dadurch wird der Vorteil erreicht, dass der Betrieb des Raddrehzahlsensors effizient an das Steuergerät angepasst werden kann.

Erfindungsgemäß ist die elektrische Schaltung ausgebildet, ferner einen Unterschied $\Delta V_B$ zwischen dem Einschaltspannungswert und dem Ausschaltspannungswert auf der Basis der folgenden Formel zu bestimmen:

$$\Delta V_B = (I_H - I_{RESET}) * R_L;$$

wobei $R_L$ der Lastwiderstandswert ist, wobei $I_{RESET}$ ein drehzahlunabhängiger, insbesondere konstanter, Stromwert im Notbetrieb des Raddrehzahlsensors ist, und wobei $I_H$ ein maximaler Stromwert im Normalbetrieb des Raddrehzahlsensors ist. Dadurch wird der Vorteil erreicht, dass der Einschaltspannungswert effizient bestimmt werden kann.

In einer weiteren vorteilhaften Ausführungsform ist der Raddrehzahlsensor ausgebildet mit einer Programmierungsschnittstelle zum Eingeben des Lastwiderstandswertes. Dadurch wird der Vorteil erreicht, dass der Lastwiderstandswert effizient eingestellt werden kann.

Gemäß einem weiteren Aspekt der Erfindung wird die Aufgabe durch eine Raddrehzahlsensoranordnung gelöst, mit: dem Raddrehzahlsensor und einem Steuergerät, welches einen Lastwiderstand mit einem Lastwiderstandswert umfasst, wobei das Steuergerät mit dem Spannungseingang des Raddrehzahlsensors verbunden und ausgebildet ist, an den Spannungseingang eine Betriebsspannung anzulegen. Dadurch wird der Vorteil erreicht, dass eine Raddrehzahlsensoranordnung mit einem effizienten Betrieb bereitgestellt werden kann.

In einer vorteilhaften Ausführungsform weist das Steuergerät ein Eingangsterminal, an welche eine Eingangsspannung anlegbar ist, und ein Ausgangsterminal zur Ausgabe der Betriebsspannung auf, wobei das Ausgangsterminal mit dem Spannungseingang elektrisch verbunden ist. Dadurch wird der Vorteil erreicht, dass ein effizientes Steuergerät verwendet werden kann.

Ausführungsbeispiele der Erfindung sind in den Zeichnungen dargestellt und werden im Folgenden näher beschrieben.

Es zeigen:

Fig. 1 eine schematische Darstellung eines Raddrehzahlsensors gemäß einer Ausführungsform;

Fig. 2 eine schematische Darstellung einer Raddrehzahlsensoranordnung gemäß einer Ausführungsform; und

Fig. 3 ein schematisches Spannung-Strom-Diagramm zur Veranschaulichung der Betriebsbereiche des Raddrehzahlsensors.

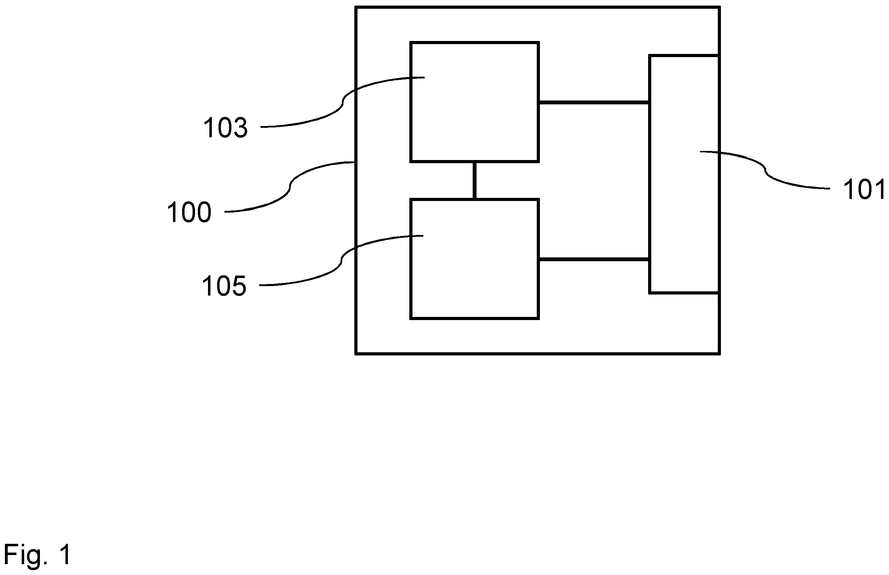

Fig. 1 zeigt eine schematische Darstellung eines Raddrehzahlsensors 100 gemäß einer Ausführungsform. Der Raddrehzahlsensor 100 umfasst einen Spannungseingang 101, eine elektrische Schaltung103 und eine Betriebssteuerung 105.

Der Raddrehzahlsensor 100 zur Erfassung einer Drehzahl eines Rads eines Kraftfahrzeugs, wobei der Raddrehzahlsensor 100 durch ein Steuergerät mit einer Betriebsspannung beaufschlagbar ist, und wobei das Steuergerät einen Lastwiderstand mit einem Lastwiderstandswert aufweist, kann ausgebildet sein mit: dem Spannungseingang 101, an welchen die Betriebsspannung durch das Steuergerät anlegbar ist; der elektrischen Schaltung 103, welche ausgebildet ist, einen Einschaltspannungswert in Abhängigkeit des Lastwiderstandswertes zu bestimmen; und der Betriebssteuerung 105, welche ausgebildet ist, den Raddrehzahlsensor 100 bei Erreichen des Einschaltspannungswertes durch die Betriebsspannung in einen Normalbetrieb zu überführen, und welche ausgebildet ist, den Raddrehzahlsensor 100 bei Erreichen eines Ausschaltspannungswertes durch die Betriebsspannung in einen Notbetrieb zu überführen.

Das Kraftfahrzeug kann ein Personenkraftfahrzeug, ein Lastkraftfahrzeug, ein Automobil, ein Motorrad, ein Elektrokraftfahrzeug oder ein Hybridkraftfahrzeug, wie ein Hybridfahrzeug, sein. Ferner kann der Raddrehzahlsensor 100 einen Hall-Sensor, einen magnetoresistiven Sensor und/oder einen optischen Sensor umfassen. Das Rad des Kraftfahrzeuges kann ferner einen magnetischen Geberring und/oder einen Lochscheibenrand umfassen. Ferner kann in dem Notbetrieb des Raddrehzahlsensors 100 eine Funktionalität des Raddrehzahlsensors 100 eingeschränkt oder deaktiviert sein.

Der Lastwiderstandswert kann ein Innenwiderstandswert oder ein Quellwiderstandswert des Steuergerätes sein. Beispielsweise beträgt der Lastwiderstandswert 10Ω, 35Ω, 50Ω, 75Ω, 100Ω, 115Ω oder 300Ω. Ferner kann der Raddrehzahlsensor 100 eine Erfassungseinrichtung zum Erfassen des Lastwiderstandwertes umfassen. Der Raddrehzahlsensor 100 kann ferner eine Programmierschnittstelle oder ein Betätigungselement, wie ein Dual In-Line Package (DIP) Schaltelement, zum Einstellen des Lastwiderstandwertes umfassen. Ferner kann der Lastwiderstandswert in einem Speicher des Raddrehzahlsensors 100 vorgespeichert sein.

Die Betriebsspannung kann 1V, 5V, 10V, 12V, 15V, 20V, 25V, 30V, 35V, 40V, 45V oder 50V betragen. Der Ausschaltspannungswert kann vorbestimmt sein. Beispielsweise beträgt der Ausschaltspannungswert 1V, 2V, 3V, 4V, 5V, 6V, 7V, 8V, 9V oder 10V. Ferner kann der Einschaltspannungswert 0,5V, 1V, 2V, 3V, 4V, 5V, 10V, 12V, 15V, 20V, 25V oder 50V betragen.

In einer vorteilhaften Ausführungsform ist die elektrische Schaltung 103 durch einen Prozessor gebildet.

In einer weiteren vorteilhaften Ausführungsform ist der Raddrehzahlsensor 100 in dem Notbetrieb ausgebildet, einen Strom mit einem drehzahlunabhängigen, insbesondere mit einem konstanten, Stromwert auszugeben.

In einer weiteren vorteilhaften Ausführungsform ist der Raddrehzahlsensor 100 in dem Normalbetrieb ausgebildet, einen Strom mit einem von einer Drehzahl des Rades abhängigen Stromwert auszugeben.

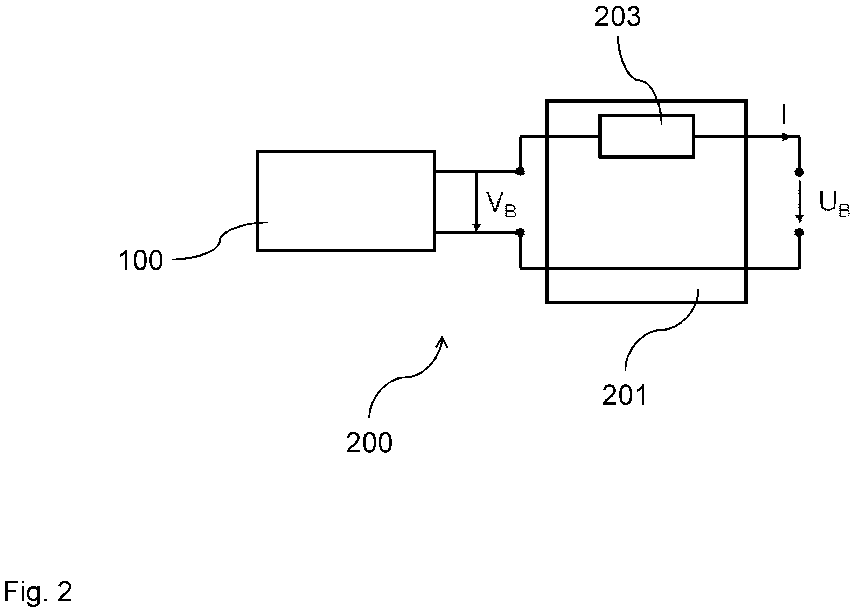

Fig. 2 zeigt eine schematische Darstellung einer Raddrehzahlsensoranordnung 200 gemäß einer Ausführungsform. Die Raddrehzahlsensoranordnung 200 umfasst den Raddrehzahlsensor 100 und ein Steuergerät 201 mit einem Lastwiderstand 203, welcher den Lastwiderstandswert $R_L$ aufweist.

Zwischen den Anschlusspolen, wie dem Spannungseingang 101, des Radrehzahlsensors 100 liegt eine Spannung $V_B$ an. Das gesamte System oder die Raddrehzahlsensoranordnung 200 wird von einer Kraftfahrzeugbatterie, wie einer Fahrzeugbatterie, mit einer Spannung $U_B$ versorgt. Der Innenwiderstand des Steuergeräts 201 ist durch den Lastwiderstand 203, welcher den Lastwiderstandswert $R_L$ aufweist, abgebildet. Während des Normalbetriebs wird ein Strom I von dem Raddrehzahlsensor 100 auf die Strompegel $I_L/I_H$, wie bei einem Raddrehzahlsensor 100 oder Standard-Sensor ohne Protokollfunktion, oder $I_L/I_M/I_H$, wie bei einem Raddrehzahlsensor 100 mit Protokollfunktion, moduliert.

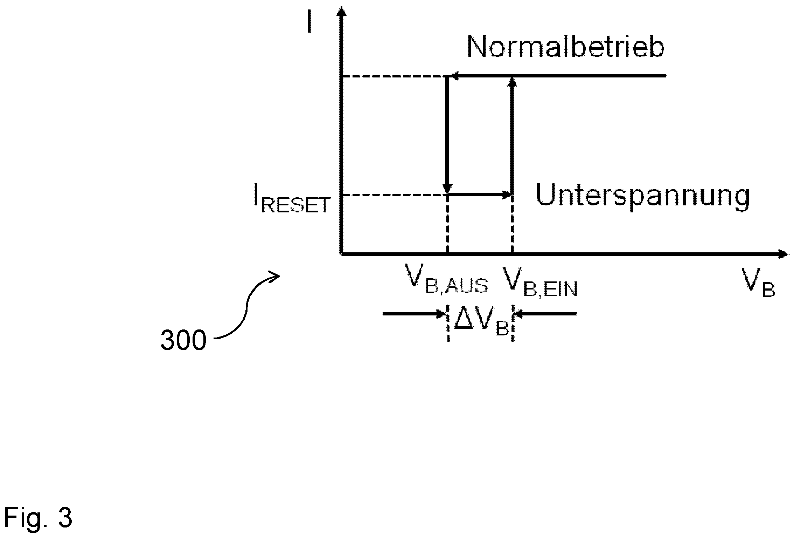

Fig. 3 zeigt ein schematisches Spannung-Strom-Diagramm 300 zur Veranschaulichung der Betriebsbereiche des Raddrehzahlsensors 100. Das Spannung-Strom-Diagramm 300 zeigt die Betriebsbereiche "Normalbetrieb" und "Unterspannung" des Raddrehzahlsensors 100, wobei der Strom I über der Spannung $V_B$ aufgetragen ist.

Unterschreitet die Spannung $V_B$ den Ausschaltspannungswert $V_{B,AUS}$, wie eine Ausschaltschwelle, kann eine korrekte Funktionsweise des Raddrehzahlsensors 100 nicht mehr gewährleistet werden. Um ein Fehlverhalten zu vermeiden, kann der Raddrehzahlsensor 100 in einen konstanten Unterspannungsstrompegel $I_{RESET}$ wechseln.

Dieser Betriebszustand wird erst dann wieder verlassen, wenn die Spannung $V_B$ einen Einschaltspannungswert $V_{B,EIN}$, wie eine Einschaltschwelle, überschreitet. Durch die Implementierung eines Unterschiedes $\Delta V_B = V_{B,AUS} - V_{B,EIN}$, wie einer Spannungshysterese, kann eine ständiges und ungewolltes Ein- und Ausschalten des Raddrehzahlsensors 100 vermieden werden, wenn $V_B$ dauerhaft im Bereich der Ausschaltschwelle $V_{B,AUS}$ liegt.

Der Unterschied $\Delta V_B$ oder die Spannungshysterese ist abhängig vom Lastwiderstand $R_L$ und errechnet sich gemäß folgender Beziehung:

$$\Delta V_B = (I_H - I_{RESET}) \cdot R_L$$

Gemäß einer vorteilhaften Ausführungsform kann für die Auslegung des Unterschieds $\Delta V_B$ oder der Spannungshysterese der in der Applikation der größtmöglich auftretende Lastwiderstandswert $R_L$ angenommen werden, um eine ausreichende Robustheit des Raddrehzahlsensors 100 in Bezug auf Unterspannungsfestigkeit zu ermöglichen. Da sich unterschiedliche Steuergeräte 201 in ihrem Lastwiderstandswert unterscheiden, kann ein Raddrehzahlsensor 100 verbaut in einem System mit einem Steuergerät 201 mit niedrigem Lastwiderstand eine hohe Spannungshysterese, wie einen hohen Unterschied $\Delta V_B$, und eine hohe Einschaltspannung $V_{B,EIN}$ aufweisen.

Somit kann für jede Applikation individuell die Spannungshysterese $\Delta V_B$ und damit die Einschaltspannung $V_{B,EIN}$ optimal an das Steuergerät 201 angepasst eingestellt werden. Hierdurch kann eine verbesserte Robustheit der Raddrehzahlsensoranordnung 200 oder des Gesamtsystems gegenüber niedrigen Spannungsniveaus erreicht werden.

**BEZUGSZEICHENLISTE**

| | |
|---|---|
| 100 | Raddrehzahlsensor |
| 101 | Spannungseingang |
| 103 | Elektrische Schaltung |
| 105 | Betriebssteuerung |
| | |
| 200 | Raddrehzahlsensoranordnung |
| 201 | Steuergerät |
| 203 | Lastwiderstand |
| | |
| 300 | Spannung-Strom-Diagramm |
| | |
| I | Strom |
| $V_B$ | Spannung |
| $U_B$ | Kraftfahrzeugbatteriespannung |
| $I_{RESET}$ | Stromwert |
| $V_{B,AUS}$ | Ausschaltspannungswert |
| $V_{B,EIN}$ | Einschaltspannungswert |
| $\Delta V_B$ | Unterschied |

**Patentansprüche**

1. Raddrehzahlsensoranordnung (200), umfassend einen Raddrehzahlsensor (100) zur Erfassung einer Drehzahl eines Rads eines Kraftfahrzeugs, wobei der Raddrehzahlsensor (100) durch ein Steuergerät (201) mit einer Betriebsspannung beaufschlagbar ist, und wobei das Steuergerät (201) einen Lastwiderstand (203) mit einem Lastwiderstandswert aufweist, mit:

einem Spannungseingang (101), an welchen die Betriebsspannung durch das Steuergerät (201) anlegbar ist;

einer elektrischen Schaltung (103), welche ausgebildet ist, einen Einschaltspannungswert in Abhängigkeit des Lastwiderstandswertes zu bestimmen; und

einer Betriebssteuerung (105), welche ausgebildet ist, den Raddrehzahlsensor (100) bei Erreichen des Einschaltspannungswertes durch die Betriebsspannung in einen Normalbetrieb zu überführen, und welche ausgebildet ist, den Raddrehzahlsensor (100) bei Erreichen eines Ausschaltspannungswertes durch die Betriebsspannung in einen Notbetrieb zu überführen, wobei die elektrische Schaltung (103) ausgebildet ist, ferner einen Unterschied $\Delta V_B$ zwischen dem Einschaltspannungswert und dem Ausschaltspannungswert auf der Basis der folgenden Formel zu bestimmen:

$$\Delta V_B = (I_H - I_{RESET}) * R_L;$$

wobei $R_L$ der Lastwiderstandwert ist, wobei $I_{RESET}$ ein drehzahlunabhängiger, insbesondere konstanter, Stromwert im Notbetrieb des Raddrehzahlsensors (100) ist, und wobei $I_H$ ein maximaler Stromwert im Normalbetrieb des Raddrehzahlsensors (100) ist; und

wobei die Raddrehzahlsensoranordnung (200) ein Steuergerät (201) aufweist, welches einen Lastwiderstand (203) mit einem Lastwiderstandswert umfasst, wobei das Steuergerät (201) mit dem Spannungseingang (101) des Raddrehzahlsensors (100) verbunden und ausgebildet ist, an den Spannungseingang (101) eine Betriebsspannung anzulegen.

2. Raddrehzahlsensoranordnung (200) nach Anspruch 1, wobei der Raddrehzahlsensor (100) in dem Notbetrieb ausgebildet ist, einen Strom mit einem drehzahlunabhängigen, insbesondere mit einem konstanten, Stromwert auszugeben.

3. Raddrehzahlsensoranordnung (200) nach Anspruch 1 oder 2, wobei der Raddrehzahlsensor (100) in dem Normalbetrieb ausgebildet ist, einen Strom mit einem von einer Drehzahl des Rades abhängigen Stromwert auszugeben.

4. Raddrehzahlsensoranordnung (200) nach einem der vorstehenden Ansprüche, mit einer Programmierungsschnittstelle zum Eingeben des Lastwiderstandswertes.

5. Raddrehzahlsensoranordnung (200) nach einem der vorstehenden Ansprüche, wobei das Steuergerät (201) ein Eingangsterminal, an welche eine Eingangsspannung anlegbar ist, und ein Ausgangsterminal zur Ausgabe der Betriebsspannung aufweist, wobei das Ausgangsterminal mit dem Spannungseingang elektrisch verbunden ist.

**Claims**

1. Wheel speed sensor arrangement (200) comprising a wheel speed sensor (100) for sensing a speed of a wheel of a motor vehicle, a control device (201) being able to apply an operating voltage to the wheel speed sensor (100), and the control device (201) having a load resistor (203) with a load resistance value, having:

a voltage input (101) to which the control device (201) can apply the operating voltage;

an electrical circuit (103) which is designed to determine a switch-on voltage value on the basis of the load resistance value; and

an operational controller (105) which is designed to change the wheel speed sensor (100) to normal operation when the switch-on voltage value is reached by the operating voltage and which is designed to change the wheel speed sensor (100) to emergency operation when a switch-off voltage value is reached by the operating voltage, the electrical circuit (103) being designed to also determine a difference $\Delta V_B$ between the switch-on voltage value and the switch-off voltage value on the basis of the following formula:

$$\Delta V_B = (I_H - I_{RESET}) * R_L;$$

where $R_L$ is the load resistance value, $I_{RESET}$ is a current value which is independent of the speed, in particular a constant current value, during emergency operation of the wheel speed sensor (100) and $I_H$ is a maximum current value during normal operation of the wheel speed sensor (100); and

the wheel speed sensor arrangement (200) having a control device (201) which comprises a load resistor (203) with a load resistance value, the control device (201) being connected to the voltage input (101) of the wheel speed sensor (100) and being designed to apply an operating voltage to the voltage input (101).

**2.** Wheel speed sensor arrangement (200) according to Claim 1, the wheel speed sensor (100) during emergency operation being designed to output a current having a current value which is independent of the speed, in particular a constant current value.

**3.** Wheel speed sensor arrangement (200) according to Claim 1 or 2, the wheel speed sensor (100) during normal operation being designed to output a current having a current value which depends on a speed of the wheel.

**4.** Wheel speed sensor arrangement (200) according to one of the preceding claims, having a programming interface for inputting the load resistance value.

**5.** Wheel speed sensor arrangement (200) according to one of the preceding claims, the control device (201) having an input terminal, to which an input voltage can be applied, and an output terminal for outputting the operating voltage, the output terminal being electrically connected to the voltage input.

**Revendications**

**1.** Ensemble de capteur de vitesse de rotation de roue (200), comprenant un capteur de vitesse de rotation de roue (100) pour la détection d'une vitesse de rotation d'une roue d'un véhicule automobile, dans lequel le capteur de vitesse de rotation de roue (100) peut être soumis à une tension de fonctionnement par un appareil de commande (201), et dans lequel l'appareil de commande (201) présente une résistance de charge (203) avec une valeur de résistance de charge, avec:

une entrée de tension (101), à laquelle la tension de fonctionnement peut être appliquée par l'appareil de commande (201);
un circuit électrique (103), qui est configuré pour déterminer une valeur de tension d'enclenchement en fonction de la valeur de la résistance de charge; et
une commande de fonctionnement (105), qui est configurée pour amener le capteur de vitesse de rotation de roue (100) dans un fonctionnement normal lorsque la tension de fonctionnement atteint la valeur de tension d'enclenchement, et qui est configurée pour amener le capteur de vitesse de rotation de roue (100) dans un fonctionnement d'urgence lorsque la tension de fonctionnement atteint une valeur de tension de déclenchement,
dans lequel le circuit électrique (103) est configuré pour déterminer en outre une différence $\Delta V_B$ entre la valeur de tension d'enclenchement et la valeur de tension de déclenchement sur la base de la formule suivante:

$$\Delta V_B = (I_H - I_{RESET}) * R_L;$$

dans laquelle $R_L$ est la valeur de la résistance de charge, dans laquelle $I_{RESET}$ est une valeur de courant indépendante de la vitesse de rotation, en particulier constante, dans le fonctionnement d'urgence du capteur de vitesse de rotation de roue (100), et dans laquelle $I_H$ est une valeur de courant maximale dans le fonctionnement normal du capteur de vitesse de rotation de roue (100); et
dans lequel l'ensemble de capteur de vitesse de rotation de roue (200) présente un appareil de commande (201), qui comprend une résistance de charge (203) avec une valeur de résistance de charge, dans lequel l'appareil de commande (201) est connecté à l'entrée de tension (101) du capteur de vitesse de rotation de roue (100) et est configuré pour appliquer une tension de fonctionnement à l'entrée de tension (101).

**2.** Ensemble de capteur de vitesse de rotation de roue (200) selon la revendication 1, dans lequel le capteur de vitesse de rotation de roue (100) est configuré pour produire en fonctionnement d'urgence un courant avec une valeur de courant indépendante de la vitesse de rotation, en particulier constante.

**3.** Ensemble de capteur de vitesse de rotation (200) selon une revendication 1 ou 2, dans lequel le capteur de vitesse de rotation de roue (100) est configuré pour produire en fonctionnement normal un courant avec une valeur de courant dépendant d'une vitesse de rotation de la roue.

**4.** Ensemble de capteur de vitesse de rotation de roue (200) selon l'une quelconque des revendications précédentes, avec une interface de programmation pour l'entrée de la valeur de la résistance de charge.

**5.** Ensemble de capteur de vitesse de rotation de roue (200) selon l'une quelconque des revendications précédentes, dans lequel l'appareil de commande (201) présente une borne d'entrée, à laquelle une tension d'entrée peut être appliquée, et une borne de sortie pour la production de la tension de fonctionnement, dans lequel la borne de sortie est connectée électriquement à l'entrée de tension.

Fig. 1

EP 3 194 225 B1

EP 3 194 225 B1

Fig. 2

Fig. 3

EP 3 194 225 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10146949 A